# FASCICULE DE BREVET EUROPEEN

(11) **EP 1 719 047 B1**
(45) Date de publication et mention de la délivrance du brevet: **23.07.2008**
(21) Numéro de dépôt: 05730729.0
(22) Date de dépôt: 23.02.2005
(51) Int. Cl.: G06F 3/045, G06F 3/048, G10H 1/055

(54) **CONTROLEUR PAR MANIPULATION D'OBJETS VIRTUELS SUR UN ECRAN TACTILE MULTI-CONTACT**
STEUERUNG, BEI DER EINE MANIPULATION VIRTUELLER OBJEKTE AUF EINEM MEHRKONTAKT-BERÜHRUNGSSCHIRM ERFOLGT
CONTROLLER INVOLVING MANIPULATION OF VIRTUAL OBJECTS ON A MULTI-CONTACT TOUCH SCREEN

(30) Priorité: 23.02.2004 FR 0450329
(43) Date de publication de la demande: 08.11.2006
(60) Demande divisionnaire: 08008243.1
(73) Titulaire: Stantum, 33000 Bordeaux (FR)
(72) Inventeur: JOGUET, Pascal, F-33000 Bordeaux (FR); LARGILLIER, Guillaume, F-33000 Bordeaux (FR)
(74) Mandataire: Bredema
(86) Numéro de dépôt international: PCT/FR2005/000428
(87) Numéro de publication internationale: WO 2005/091104

(56) Documents cités:
- US-A- 5 027 689
- US-A- 5 053 585
- US-A1- 2002 005 108
- US-B2- 6 762 752

## Description

La présente invention se rapporte au domaine des contrôleurs musicaux.

La présente invention se rapporte plus particulièrement à une interface homme-machine permettant par exemple le contrôle de logiciels de musique ou d'un automate par un écran tactile multi-contact avec manipulation d'objets virtuels.

L'art antérieur connaît déjà les contrôleurs de logiciels de type manuel. Ce sont par exemple des potentiomètres manipulables par l'utilisateur sous forme de console et contrôlant les différentes fonctions des logiciels de musique. Une telle console fait par exemple l'objet de la demande PCT WO 01/69399.

Le désavantage de ce type de contrôleur est qu'ils sont très peu ergonomiques pour une manipulation efficace des logiciels.

La solution proposée par la présente invention est de mettre en oeuvre un écran tactile pour la manipulation et l'accès aux fonctions logicielles.

Dans le domaine des contrôleurs tactiles, l'art antérieur connaît déjà par la demande PCT WO 03/041006, des contrôleurs musicaux avec contrôle tactile sur un capteur matriciel. La technologie décrite dans ce document permet un contrôle tactile de type multi-contact, où tous les doigts peuvent intervenir pour le contrôle des logiciels.

Cependant ces documents ne proposent pas de retour visuel des manipulations, puisque les différents capteurs matriciels sont de type opaque.

L'art antérieur connaît, par la demande de brevet américain US 2002/005108 (Lester Franck Ludwig) *"Tactile, visual and array controllers for real-time control of music signal processing, mixing, video and lighting",* un dispositif selon le préambule de la revendication 1.

L'art antérieur connaît également, par le brevet américain US 5 027 689 (Yamaha) *"Musical tone generating apparatus",* un appareil générateur de sons musicaux. Cet appareil comporte un dispositif de génération d'informations de position pour générer des informations de position d'instrument de musique (PS) en tant que valeurs de coordonnées planes. Ces informations (PS) sont stockées dans un dispositif mémoire ou déterminées de façon sélective par une opération manuelle. L'appareil comprend aussi un dispositif de conversion d'informations pour convertir les informations (PS) en informations de contrôle de paramètres de sons musicaux (PD). Ces informations de contrôle PD contrôlent les signaux de source de sons musicaux (S11, S12 et S13) pour générer un champ de son correspondant à la position d'instruments de musiques disposés sur une scène. Ceci permet à un opérateur de vérifier les positions d'instruments de musique sur une scène, fournissant ainsi la sensation d'être dans une vraie représentation « en live ».

Dans ce brevet américain, il est fait mention de multicontact, mais il s'agit seulement de deux contacts sur un axe et non pas en coordonnées cartésiennes. L'appareil de ce brevet américain ne fonctionne qu'en linéaire pour l'option multipoint et ne permet pas le tracking (suivi de trajectoire). De plus, l'appareil de ce brevet américain nécessite une pluralité de capteurs, spécifique à chacun des instruments, alors que la présente invention vise un capteur générique.

L'art antérieur connaît également une solution de type contrôleur musical sous la forme d'un écran tactile avec retour visuel des objets manipulés par le brevet US 5,559,301. Cependant, ce brevet décrit des objets prédéfinis (essentiellement de type sliders et potentiomètre circulaire). Ces types d'objets sont assez limitatifs et peuvent s'avérer peu ergonomiques pour des manipulations spéciales. Par ailleurs, le mode d'acquisition décrit dans ce brevet n'est pas en temps réel. En effet, un icône doit d'abord être activé par un premier contact du doigt, puis l'objet manipulé, et les valeurs ne sont mises à jour qu'après que l'icône soit relâché. Cette solution ne permet pas une gestion en temps réel des paramètres associés à l'objet. Enfin, le capteur tactile utilisé dans ce brevet est un capteur « mono-contact » ne permettant l'acquisition par exemple que pour un seul doigt, et donc le contrôle d'un seul objet à la fois. Cette caractéristique est très limitative pour une manipulation efficace des objets.

Dans toute la suite, le terme « multi-contact » définit un capteur tactile permettant l'acquisition des zones de contact de plusieurs doigts à la fois, par opposition aux capteurs « mono-contact » ne permettant l'acquisition que pour un seul doigt ou pour un stylet, comme par exemple pour le brevet précédent US 5,559,301.

La présente invention entend remédier aux inconvénients de l'art antérieur en proposant un écran de contrôle musical tactile multi-contact avec retour visuel des différentes actions de l'utilisateur sur des objets paramétrables.

Au vu du document US 2002/005108 susmentionné, le problème résolu par l'invention est d'améliorer le contrôle de l'équipement informatisé à partir du capteur tactile pouvant afficher des objets graphiques.

Ce problème est résolu selon l'invention par un dispositif selon la revendication 1 et un procédé selon la revendication 5.

Des modes de réalisation particuliers de l'invention sont décrits dans les revendications dépendantes.

De préférence, les traitements comportent une détection de zone englobante de la zone de contact d'un objet avec le capteur tactile.

Avantageusement, les traitements comportent une détection de barycentre.

De préférence, il comporte des étapes de rafraîchissement des objets graphiques en fonction des traitements effectués lors d'une étape d'acquisition précédente au moins.

Selon un mode de mise en oeuvre, il comporte une étape d'édition d'objets graphiques consistant à générer une représentation graphique à partir d'une bibliothèque de composants et de fonctions graphiques, et à déterminer une loi de traitement associée.

De préférence, la fréquence d'acquisition des informations tactiles est supérieure à 50 hertz.

La présente invention concerne également un dispositif pour le contrôle d'un équipement informatisé comportant un capteur bidimensionnel multi-contact pour l'acquisition d'informations tactiles caractérisé en ce qu'il comporte en outre un écran de visualisation disposé sous le capteur tactile bidimensionnel, ainsi qu'une mémoire pour l'enregistrement d'objets graphiques associés chacun à au moins une loi de traitement, et un calculateur local pour l'analyse de la position des informations tactiles acquises et l'application d'une loi de traitement en fonction de ladite position par rapport à la position des objets graphiques.

De préférence, il se connecte en outre à un hub (multi-prise réseau) pour former un réseau de contrôleurs.

Avantageusement, ledit capteur tactile bidimensionnel multi-contact est une dalle résistive.

De préférence, ledit dispositif comprend en outre une sortie réseau apte à recevoir un câble réseau.

On comprendra mieux l'invention à l'aide de la description, faite ci-après à titre purement explicatif, d'un mode de réalisation de l'invention, en référence aux figures annexées où :
- la figure 1A est un diagramme fonctionnel du contrôleur selon l'invention,
- la figure 1B représente la structure du contrôleur associé au diagramme fonctionnel selon l'invention,
- la figure 1C représente le diagramme fonctionnel des différentes étapes des processus d'acquisition des données provenant du capteur, de la création des curseurs associés aux différents doigts, de l'interaction avec les objets graphiques et de la génération des messages de contrôle,
- la figure 2A est une description du capteur tactile matriciel,
- la figure 2B décrit la première étape du fonctionnement du balayage du capteur en vue d'obtenir l'information multi-contact,
- les figures 2C, 2E et 2F expliquent la résolution des problèmes d'orthogonalité,
- la figure 2D est un diagramme fonctionnel de l'interface de capture,
- la série de figure 3A à 3F explique les étapes de création de curseurs, de filtrage, de calcul de barycentre, de mapping et de contrôle des objets graphiques,
- les figures 4 et 5 représentent différents exemples d'objets graphiques,
- les figures 6 à 10 représentent différents exemples de combinaisons d'objets graphiques sur le contrôleur,
- la figure 11 illustre l'utilisation en réseau du contrôleur associé à l'ordinateur de l'utilisateur.

Dans toute la suite, le contrôle s'effectue sur un équipement informatisé pouvant être par exemple un logiciel de musique, un automate, un équipement audiovisuel, ou un équipement multimédia.

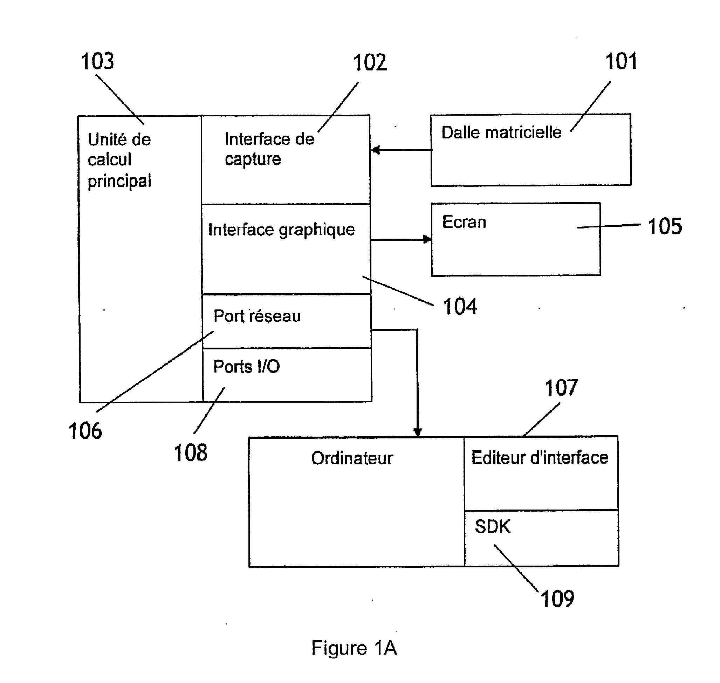

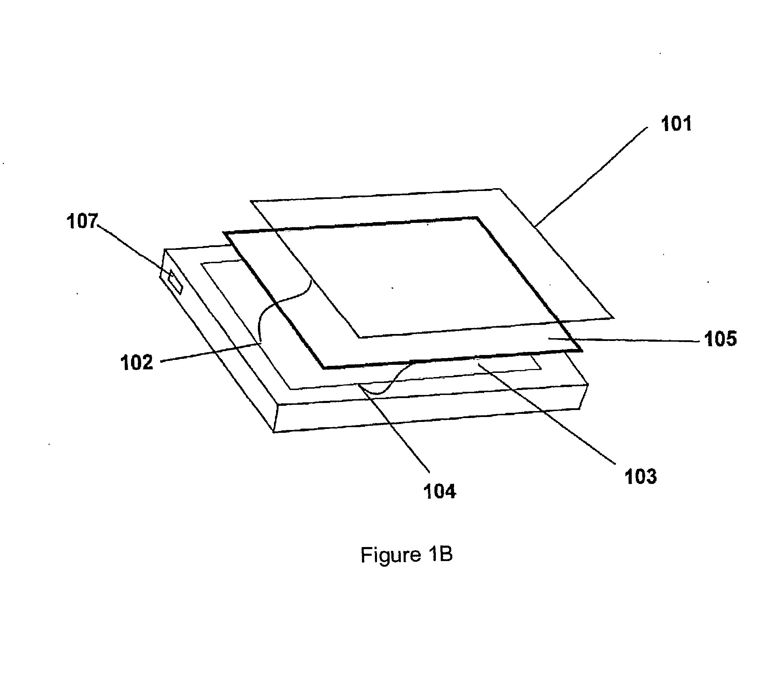

Illustré figures 1A, 1B et plus précisément 2A, le premier élément fondamental de la présente invention est le capteur matriciel (101), nécessaire à l'acquisition (manipulations multi-contact) à l'aide d'une interface de capture (102). Le capteur peut être éventuellement divisé en plusieurs parties afin d'accélérer la captation, chaque partie étant balayée simultanément.

Le principe général est de créer autant de curseurs (comme un curseur de souris) qu'il y a de zones détectées sur le capteur et de suivre leurs évolutions dans le temps.

Lorsque l'utilisateur retire ses doigts du capteur, les curseurs associés sont détruits.

De cette manière, on capte la position et l'évolution de plusieurs doigts sur le capteur simultanément. C'est une captation multi-contact tout à fait innovante pour ce type de contrôleur.

Le capteur utilisé pour l'exemple d'implémentation de l'invention est une dalle tactile résistive matricielle de type connue.

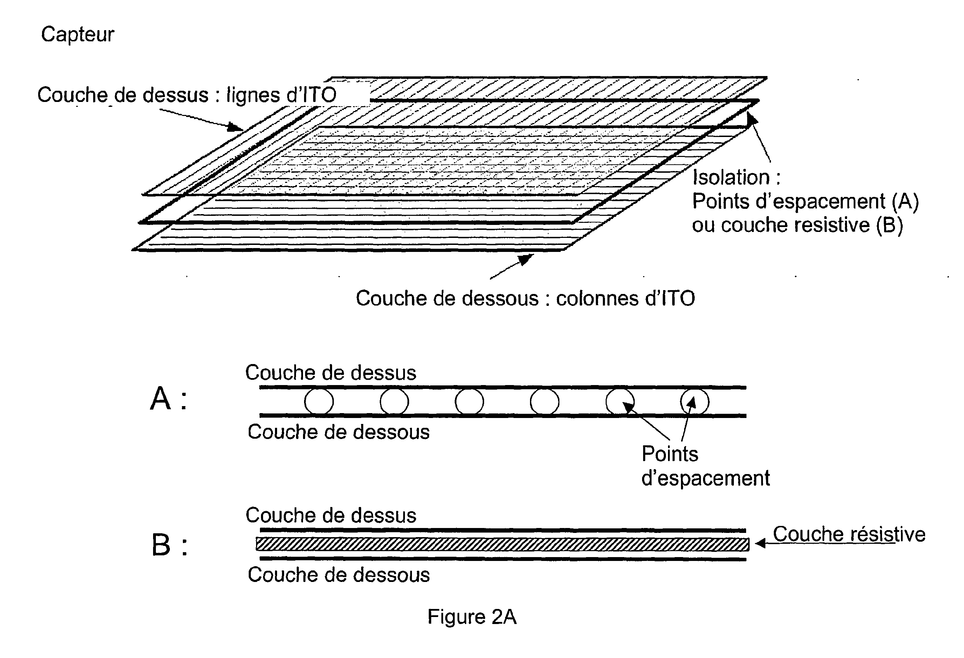

Les dalles tactiles résistives matricielles sont composées de 2 faces superposées sur lesquelles sont organisées des pistes d'ITO (oxyde indium étain), qui est un matériau conducteur translucide. Les pistes sont disposées en lignes sur la couche supérieure et en colonnes sur la couche inférieure, formant une matrice. (cf. figure 2A).

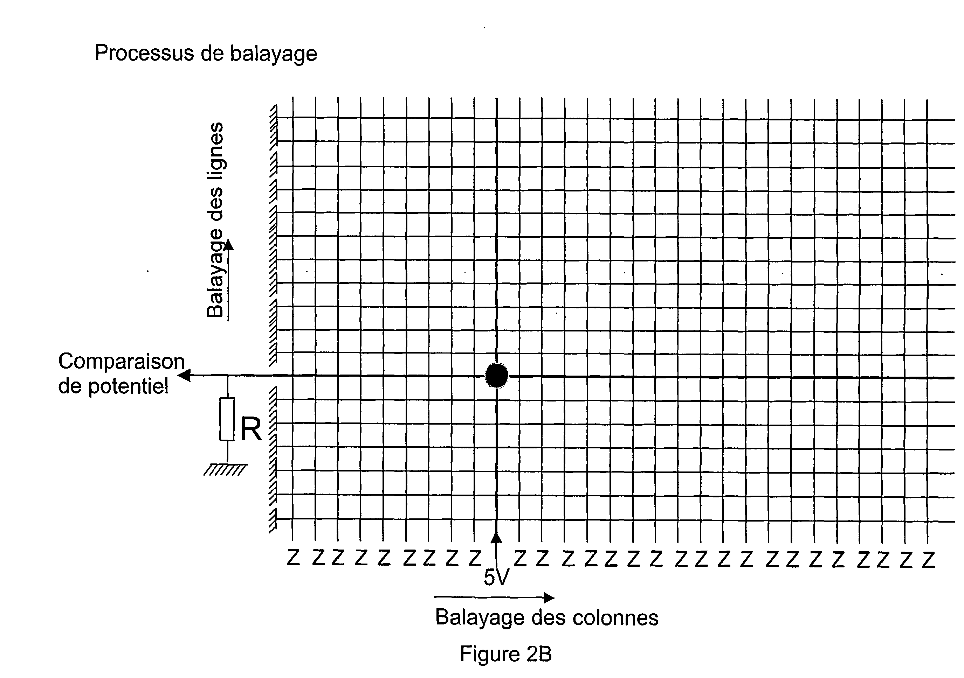

Les deux couches conductrices sont isolées l'une de l'autre par des entretoises d'espacement. L'intersection d'une ligne avec une colonne forme un point de contact. Quand on pose un doigt sur la dalle, on met en contact une ou des colonnes situées sur la couche supérieure avec une ou des lignes situées sur la couche inférieure créant ainsi un ou plusieurs points de contact. (cf. figure 2B).

Avantageusement, une variante de l'invention consiste à remplacer les entretoises par un matériau résistif transparent (par exemple un polymère conducteur), dont la résistance varierait en fonction de l'écrasement, celle-ci chutant si l'on exerce une force d'appui suffisante. De cette manière, on pourrait également extraire la pression exercée sur la surface en effectuant une mesure de résistance à chaque intersection ligne-colonne.

En vue de l'utilisation musicale ou audiovisuelle de ces dalles, l'impératif est de mesurer l'activité d'un doigt avec une latence maximum de 20 ms.

On mesure au moins 100 fois par seconde l'état de la dalle, celle-ci pouvant être divisée en plusieurs zones afin d'effectuer un traitement parallèle sur les lesdites zones.

Ainsi, selon l'invention, la fréquence d'échantillonnage de la dalle est d'au moins 100 Hz.

Un autre élément fondamental est le dispositif électronique de balayage de la dalle tactile permettant la détection simultanée de plusieurs points de contact sur le capteur matriciel. En effet, les méthodes d'acquisitions connues pour ce type de capteurs ne permettent pas la détection de plusieurs points de contact simultanés.

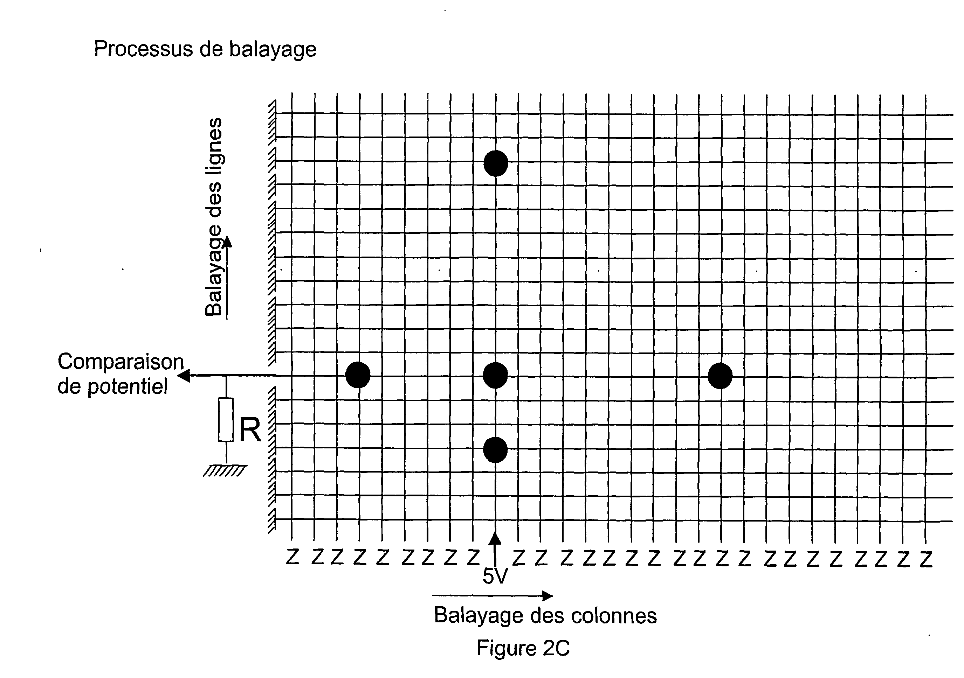

Les méthodes connues à ce jour ne permettent pas de résoudre les problèmes illustrés par la figure 2C.
Si on effectue une mesure simultanée de toutes les lignes en alimentant une colonne, des problèmes d'orthogonalité surviennent. Le point de contact n°1 va masquer le point de contact n°2. De même, si on mesure une ligne lorsque toutes les colonnes sont alimentées, le point de contact n°2 est masqué par le point de contact n°1. La solution proposée pour résoudre ce problème consiste à effectuer un balayage séquentiel du capteur.

Les colonnes sont alimentées par exemple en 5V à tour de rôle et on mesure le niveau des lignes (niveau haut ou bas) séquentiellement.
Quand une des colonnes est mise sous tension, les autres sont en haute impédance afin d'empêcher la propagation du courant dans celles-ci.
Ainsi, On alimente d'abord la colonne 1 tandis que les autres colonnes sont en haute impédance.
Les lignes sont mesurées séquentiellement, c'est-à-dire les unes après les autres. On lit dans un premier temps la valeur sur la première ligne tandis que l'on relie toutes les autres lignes à la masse. Puis on relie la ligne 1 à la masse et on lit la valeur sur la ligne 2, et ainsi de suite jusqu'à ce que l'on ait lu la valeur de toutes les lignes.

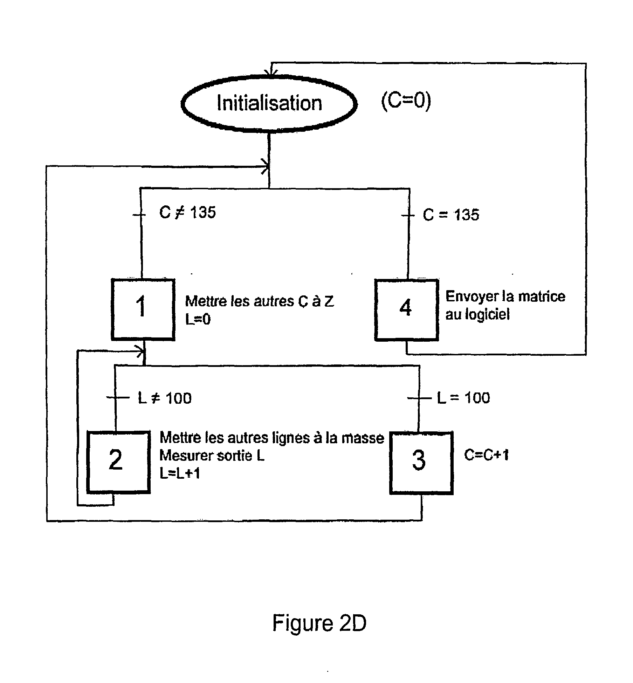

La colonne 1 passe ensuite à l'état de haute impédance et la colonne 2 est alimentée. On recommence à lire l'état de chacune des lignes.
On effectue ainsi le balayage jusqu'à la dernière colonne.
Le but étant de former une dalle multi-contact, le balayage total de la matrice se fait à une fréquence élevée afin d'obtenir la valeur de chacun des points d'intersection de la dalle plusieurs fois par seconde.
Le dispositif permettant d'acquérir les données de la dalle est illustré par la figure 2D, représentant l'algorithme d'acquisition d'une dalle comprenant 100 lignes (L) et 135 colonnes (C).

Certains problèmes de masquage d'un point par un ou plusieurs autres points peuvent apparaître.
En effet, la résistance du matériau transparent (ITO) composant les colonnes et les lignes augmente proportionnellement à la longueur des pistes. Ainsi, le potentiel mesuré au coin inférieur gauche du capteur sera supérieur au potentiel mesuré à au coin supérieur droit.

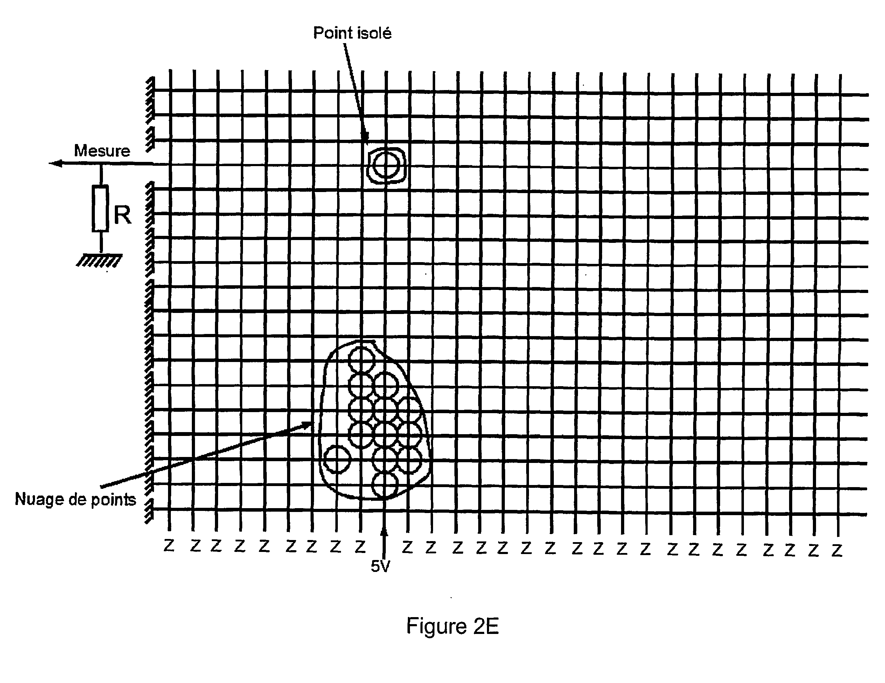

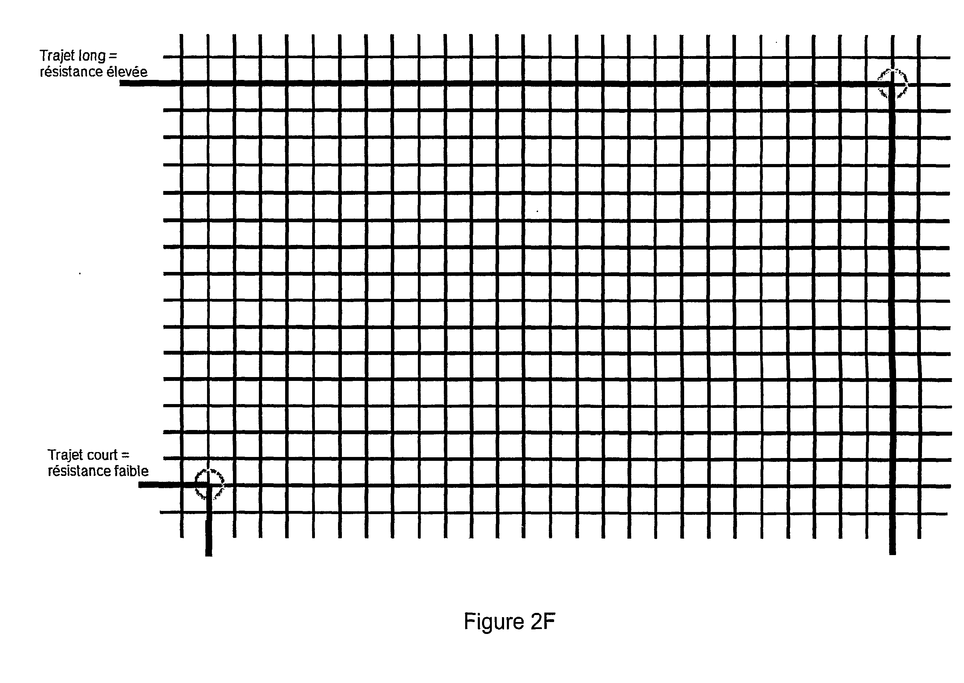

Sur les figure 2E et 2F, le nuage de points absorbe une grande partie du potentiel électrique de la colonne alimentée. La potentiel mesuré sur le point isolé est donc trop faible pour être détecté.

La solution à ce problème consiste à utiliser un comparateur de tension piloté numériquement en sortie de la ligne afin de déterminer si la tension observée est suffisante pour être considérée comme résultant de l'action d'un doigt sur la dalle tactile. La valeur de référence du comparateur (seuil de comparaison) est décrémentée à chaque mesure de ligne. Ainsi les valeurs de comparaisons des dernières lignes sont inférieures à celles des premières lignes, ce qui permet de détecter de la même manière un point de contact situé en bas à gauche ou en haut à droite.

On effectue alors par exemple l'échantillonnage complet de la dalle au moins 100 fois par seconde pour les colonnes et les lignes.

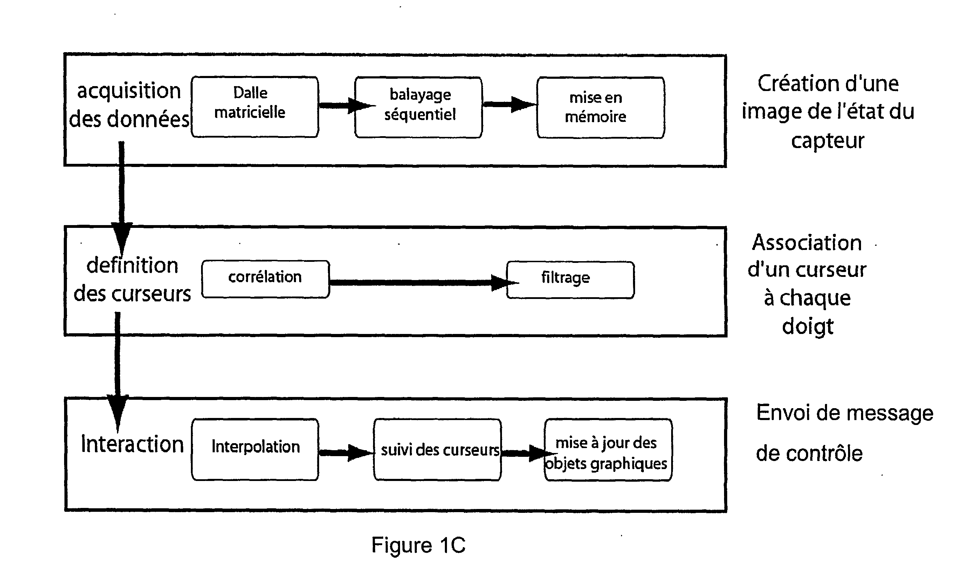

Les données issues de l'interface de capture (102) forment ainsi une image représentative de l'ensemble du capteur. Cette image est placée en mémoire afin qu'un programme puisse procéder au filtrage, à la détection des doigts et à la création des curseurs. On se référera à cet effet à la figure 1C.

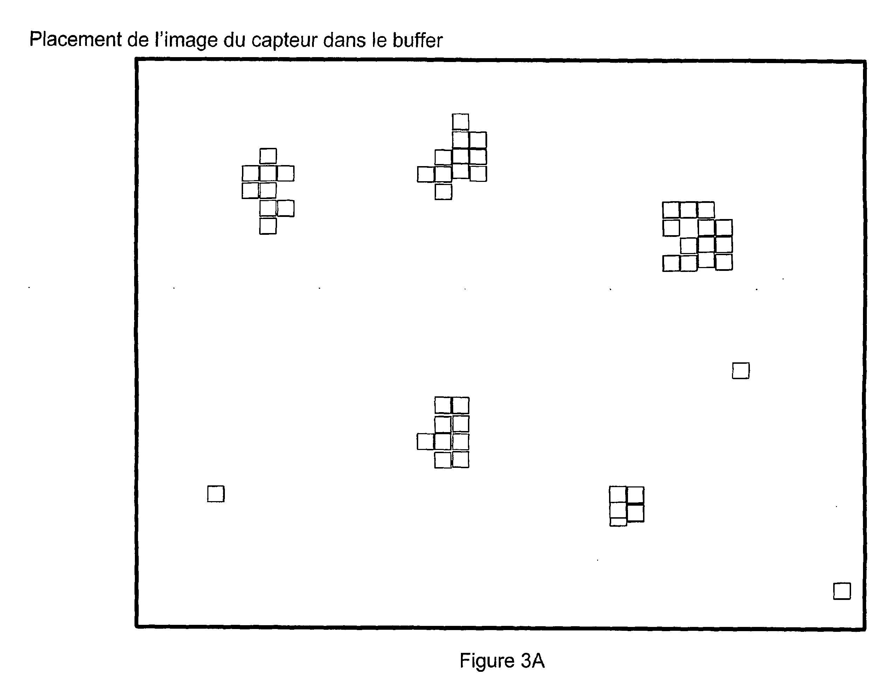

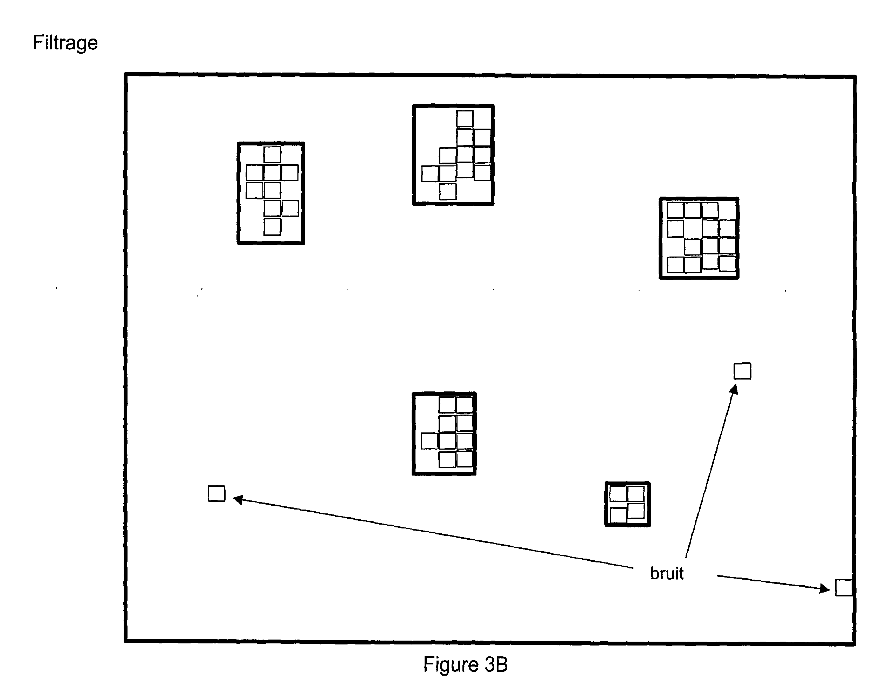

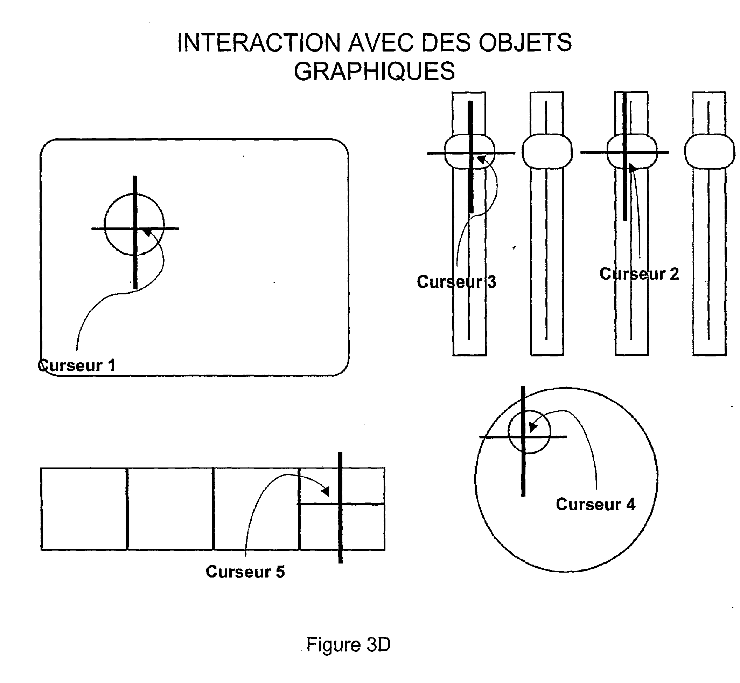

La phase de filtrage illustré par la figure 3B consiste à éliminer le bruit éventuellement généré par l'interface d'acquisition ou le capteur lui-même. On considère que seuls des nuages de plusieurs points de contact peuvent correspondre à l'appui d'un doigt. On effectue donc une détection de zone englobante afin d'éliminer des points dé contact isolés.

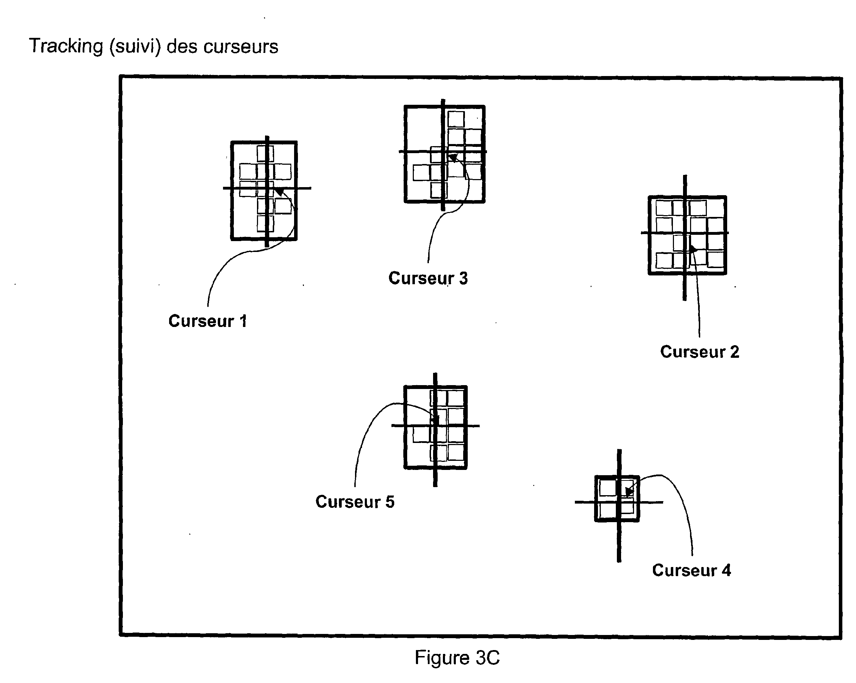

L'étape suivante consiste à associer un curseur à chaque point d'appui (figure 3C). À cet effet, on calcule le barycentre de chaque zone englobante. Lorsqu'un doigt est relâché, le curseur correspondant est libéré.

Le programme exécuté localement par le processeur principal permet d'associer ces curseurs à des objets graphiques qui sont affichés sur l'écran (105) afin de les manipuler. Simultanément, le programme local utilise ces curseurs pour générer des messages de contrôle adressés à l'ordinateur hôte ou l'appareil contrôlé.

En outre, le programme comporte un simulateur de modèles physiques permettant de modifier les lois d'interaction entre les curseurs et les objets graphiques. Différents modèles physiques peuvent être employés : système masse-ressort, vibration d'une corde, gestion des collisions, loi de la gravité, champ électromagnétique.

Le programme considère le positionnement des curseurs et sur quel objet graphique chacun se situe. En fonction de l'objet considéré, un traitement spécifique est appliqué aux données provenant du capteur. Par exemple, une mesure de pression (correspondant à une évolution de la tâche faite par le doigt sur la dalle tactile dans un court intervalle de temps) peut être interprétée. En fonction de la nature de l'objet, d'autres paramètres peuvent être déduits : l'accélération, la vitesse, les trajectoires, etc. Des algorithmes de reconnaissance de forme peuvent être appliqués également afin de différencier différents doigts.

Le programme principal (103) transmet également à l'interface graphique (104) les données à afficher à l'écran (105). Cette interface graphique est en outre constituée d'un processeur graphique. Ce processeur graphique est par exemple de type connu. Ce dernier peut être constitué de fonctions graphiques primitives permettant par exemple l'affichage de bitmap, de polices de caractères de polygones et de figures en 2 et 3 Dimensions, le dessin vectoriel, l'antialiasing, le texturage, la transparence et l'interpolation de couleurs.

Dans cette déclinaison de l'invention, le programme principal comprend également un analyseur d'expressions mathématiques qui permet de saisir et de calculer en temps réel des fonctions mathématiques. Celles-ci permettent de modifier les valeurs de toute variable. Par exemple, les coordonnées (x, y) d'un curseur à l'intérieur d'un objet peuvent être considérées comme deux variables comprises entre 0 et 1. L'analyseur d'expression permet de créer une expression du type « x*1000+600 » afin d'obtenir une nouvelle variable, dont la valeur sera comprise entre 600 et 1600. La variable obtenue permet de contrôler par exemple la fréquence d'un oscillateur comprise entre 600 et 1600 hertz.
Les expressions mathématiques peuvent s'appliquer aussi bien à des valeurs scalaires qu'à des vecteurs.

L'analyseur d'expression est un outil permettant d'effectuer des calculs temps réel sur les variables des objets.

Le programme local (103) réalise également un formatage des données sous forme de messages pour le port réseau (106), qui les communiquera à l'ordinateur sur lequel sont exécutées les applications informatiques.

L'interface réseau est par exemple une interface Ethernet 10/100 baseT standard, qui communique par paquets grâce au protocole TCP/IP. Elle peut aussi être une interface réseau de type sans fil.

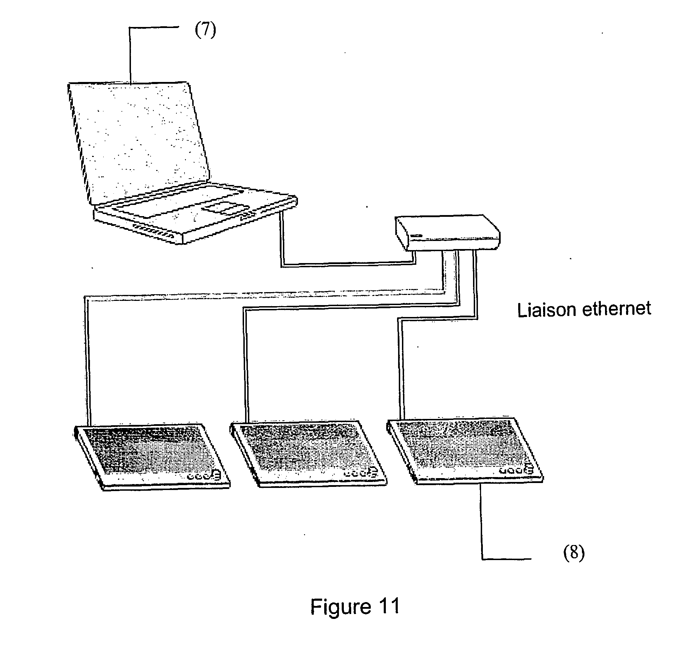

Illustré figure 11, il faut noter que la liaison Ethernet offre à l'utilisateur la possibilité, grâce à l'utilisation d'un simple hub (multiprise réseau), d'étendre indéfiniment son dispositif de contrôle en constituant un réseau de contrôleurs selon l'invention.

Le (ou les) contrôleur(s) présent(s) sur le réseau communiquent alors entre eux et avec l'ordinateur hôte sous la forme d'envois réciproques de messages.

L'ensemble constituant la machine est par ailleurs alimentée par une batterie non représentée de type connu ou par un adaptateur secteur.
Enfin, au niveau de l'ordinateur de l'utilisateur, un éditeur d'interface (107) permet de programmer de manière graphique l'interface, c'est-à-dire l'ensemble des objets graphiques affichés sur l'écran (105). Dans ce mode de réalisation de l'invention, les interfaces sont elles-mêmes organisées en scènes, qui sont des structures hiérarchiques supérieures. Chaque scène comprend en effet plusieurs interfaces. L'utilisateur peut permuter les interfaces à l'aide d'un clavier de bouton ou d'un pédalier de contrôle connecté au port d'entrée-sortie.

Une autre fonction de l'éditeur d'interface est d'affecter les données de contrôle aux paramètres que l'utilisateur souhaite contrôler

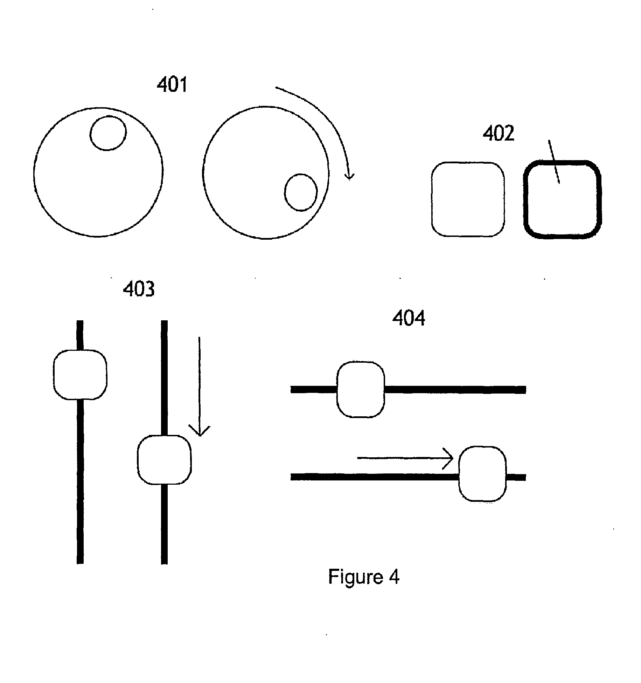

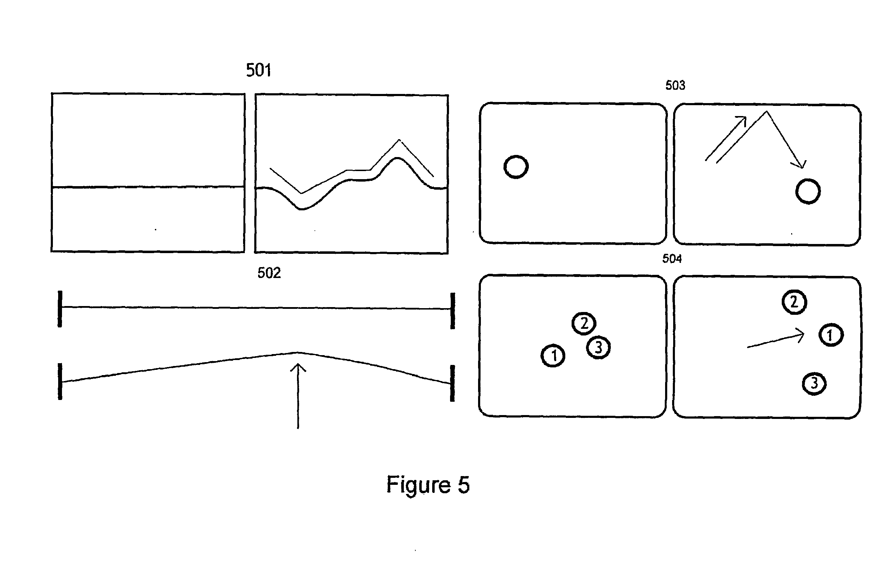

L'utilisateur dispose par exemple d'une bibliothèque d'objets graphiques paramétrables permettant de composer différentes interfaces selon l'application désirée. Les figures 4 et 5 représentent différents objets graphiques mis à la disposition de l'utilisateur.

Ils peuvent être prédéfinis et dédiés tout particulièrement à la musique ou au contrôle d'équipements audiovisuels ou d'appareils informatisés. Par exemple, un potentiomètre linéaire (403, 404) est particulièrement adapté à contrôler des paramètres continus tels que le volume d'un signal sonore, la fréquence d'un filtre. Une molette (401) peut par exemple servir à contrôler le défilement d'un lecteur audio ou vidéo. Les objets peuvent aussi être développés librement grâce à un kit de développement (SDK) de type connu (109). Le kit de développement donne accès aux fonctions primitives graphiques du contrôleur.

L'éditeur d'interface (107) permet ainsi à l'utilisateur de créer aisément des interfaces personnalisées de contrôle. C'est un logiciel exécuté sur l'ordinateur de l'utilisateur. Il se compose d'une fenêtre principale représentant la surface tactile de la dalle sur laquelle on peut déposer des objets graphiques issus d'une bibliothèque d'objets proposés. La manipulation et le placement des objets sur la surface s'effectuent à la souris, par exemple. L'objet déposé sur la fenêtre s'affiche simultanément sur le contrôleur, l'objet étant enregistré dans une mémoire du contrôleur. Il peut par la suite déplacer ou redimensionner les objets à sa convenance.

En plus du positionnement des objets graphiques sur la fenêtre principale, d'autres fenêtres secondaires permettent de régler différents paramètres inhérents aux objets (propriétés graphiques, comportement physique). Par exemple, un bouton (402) peut aussi bien agir comme un interrupteur ou comme une gâchette. Dans le cas du mode gâchette, une mesure de pression peut optionnellement être opérée. Un autre exemple d'objet paramétrable est l'aire 2D (503, 504), dont le principe consiste à déplacer des pions à l'intérieur d'une zone délimitée. Le nombre de pions présents sur l'aire2D est une option paramétrable. L'aire peut être configurée en mode uniplan, mode dans lequel les pions entrent en collision les uns avec les autres, ou multi-plan, mode où les pions sont placés sur des plans distincts superposés. Des paramètres physiques peuvent également être configurés : le coefficient de frottement des pions sur le plan, le rebond et l'attraction des pions sur les bords et entre eux.

L'éditeur permet également de lister les objets présents sur la surface, de créer des fonctions et des variables grâce à l'analyseur d'expression.

Ainsi, les objets ont par défaut un certain nombre de variables (x, y, z...) correspondant à leurs axes primitifs. Ces variables sont toujours comprises entre 0 et 1 et varient sous forme de nombres 32 bit à virgule flottante. L'utilisateur doit pouvoir « connecter » ces variables vers d'autres valeurs plus représentatives de ce qu'il souhaite contrôler. Ainsi, l'analyseur d'expression donne la possibilité de créer de nouvelles variables à l'aide d'expressions mathématiques simples. Par exemple, un potentiomètre rectiligne a un axe primitif qui est x. Si l'utilisateur désire contrôler une fréquence de 500 à 2500Hz, il doit créer une variable a=2000x+500.

Des options d'affichage de statut sont aussi souhaitées. Elles permettent de contrôler visuellement l'état d'un paramètre.

Les traitements ultérieurs qui seront appliqués aux objets au niveau de l'unité de calcul principale (103) par la manipulation sur la dalle sont spécifiques à chaque type d'objet.

En effet, un mouvement circulaire du doigt sur un potentiomètre linéaire virtuel (403, 404) ne doit pas avoir d'action sur l'état du potentiomètre, alors qu'il doit modifier l'état dans le cas d'un potentiomètre circulaire (401). De même, certains objets ne peuvent prendre en compte qu'un seul doigt (le potentiomètre linéaire par exemple) en même temps, tandis que d'autres peuvent accepter l'interaction de plusieurs doigts (clavier, aire2D).

Par exemple, 1' « aire 2D » (503, 504) est une surface rectangulaire qui contient un certain nombre de pions, chacun ayant une position propre. Les pions peuvent être déplacés par l'utilisateur.

Le principe est de mettre en place un système physique pour l'ensemble des objets, c'est-à-dire par exemple que les pions déplacés par l'utilisateur acquièrent une vitesse d'inertie qu'ils gardent lorsque l'utilisateur les relâche ; les pions ainsi soumis à leur vitesse propre vont rebondir sur les bords de l' « aire 2D » et même rebondir entre eux. De plus, ils seront soumis à des forces d'attraction/répulsion sur les bords et sur les autres pions, ainsi qu'à un coefficient de frottement sur la surface de l'aire 2D, pour stopper les pions au bout d'un certain temps. Tous ces paramètres seront paramétrables.

Une autre variante de l'aire 2D consiste à appliquer une loi physique de type «masse-ressort ». Un élastique virtuel est tendu entre chaque curseur et chaque pion. L'utilisateur peut modifier le comportement de cet objet en configurant la friction et le facteur d'interpolation. Ces propriétés peuvent également être modifiées en temps réel à l'aide d'autres objets.

Un autre exemple est le « Multislider » (501), une table de curseurs dont le nombre est configurable. L'utilisation typique est le contrôle d'un égaliseur graphique ou d'une enveloppe spectrale. La différence entre un « multislider » et plusieurs potentiomètres linéaires simples juxtaposés est que l'on peut modifier l'ensemble des curseurs en un seul toucher, en faisant glisser le doigt. Le multislider peut également être utilisé comme une corde discrétisée. Pour cela, il suffit de lui appliquer le modèle physique d'une corde, dont la tension est paramétrable par l'utilisateur.

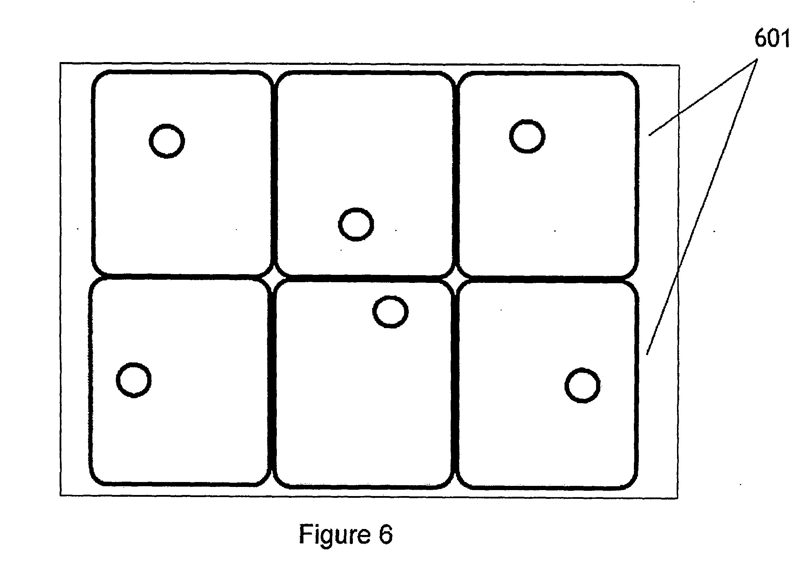

Une visualisation de différents exemples d'interfaces réunissant différents types d'objets est illustrée par les figures 6 à 9, où l'on peut observer plusieurs objets décrits ci-dessus.

La figure 6 représente un arrangement de 6 aire 2D (601) contenant chacune 1 pion. Cette interface pourrait contrôler, par exemple, six filtres différents affectés à une ou plusieurs sources sonores. Dans ce cas, le déplacement en abscisse de chaque pion à l'intérieur de chaque zone contrôle la fréquence du filtre, tandis que le déplacement en ordonnée contrôle le facteur qualité ou la largeur de bande du filtre.

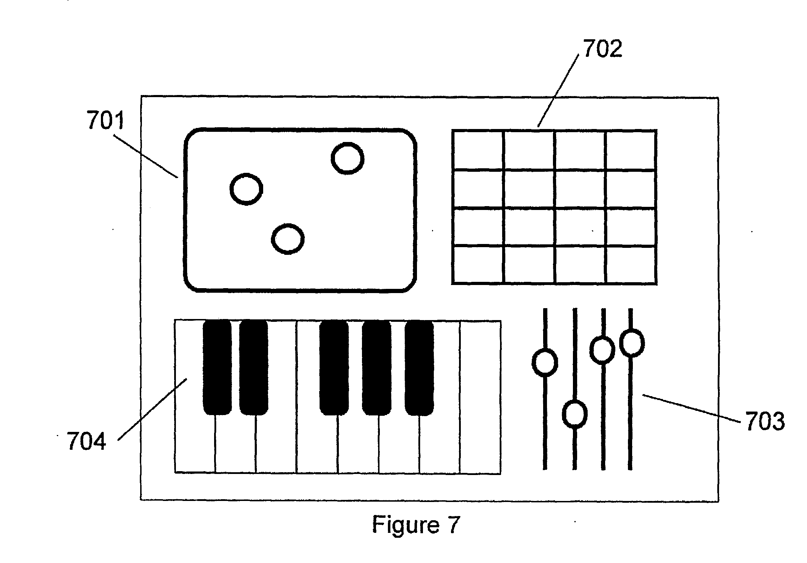

La figure 7 représente un exemple de contrôle d'un synthétiseur ou d'un échantillonneur de type connu. L'interface se compose d'un clavier tempéré (704) contrôlant la hauteur des sons, d'un groupe de quatre potentiomètres (703) verticaux permettant de contrôler par exemple son enveloppe dynamique (temps d'attaque, temps de décroissance, niveau d'entretien, temps de relâchement). Une aire 2D (701) contenant 3 pions permet de contrôler par exemple des effets appliqués au son (réverbération, écho, filtres). Une matrice de 16 boutons (702) peut par exemple déclencher 16 différentes séquences musicales enregistrées ou encore rappeler 16 configurations pré-enregistrées des contrôles décrits précédemment.

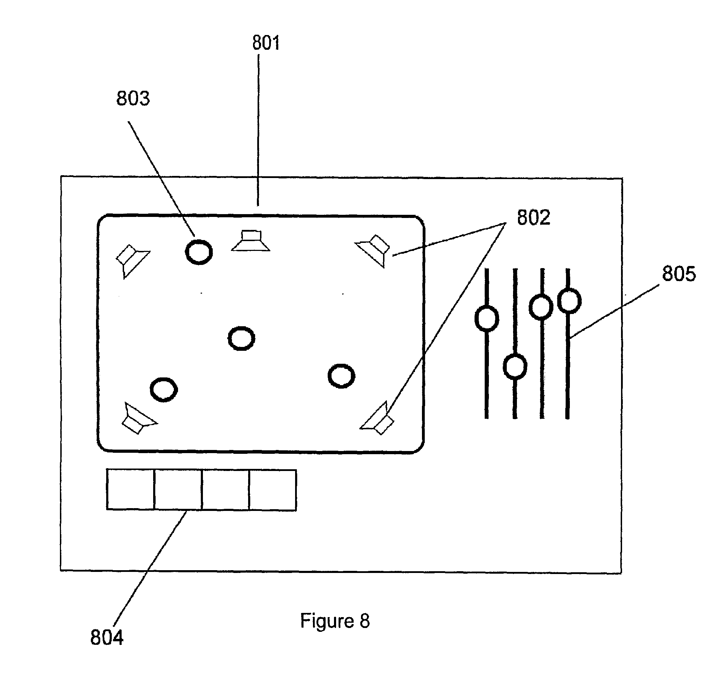

Un autre exemple d'application de l'invention est illustré par la figure 8 représentant le contrôle d'un dispositif de diffusion de différentes sources sonores dans l'espace, sur un dispositif constitué de plusieurs haut-parleurs. Dans cette configuration, une aire 2D (801) représentant l'espace de diffusion contient 4 pions (801) correspondant à quatre sources sonores. L'aire 2D contient également 5 icônes (802) représentant le positionnement de cinq haut-parleurs. En déplaçant les différents pions (802) on règle le niveau et/ou la phase de chaque source sonore par rapport à chaque enceinte, ce qui détermine son emplacement dans l'espace. Un groupe de quatre potentiomètres linéaires (803) permet qui plus est de régler le niveau relatif de chaque source. Un ensemble de quatre boutons (804) permet d'activer ou de désactiver chaque source sonore.

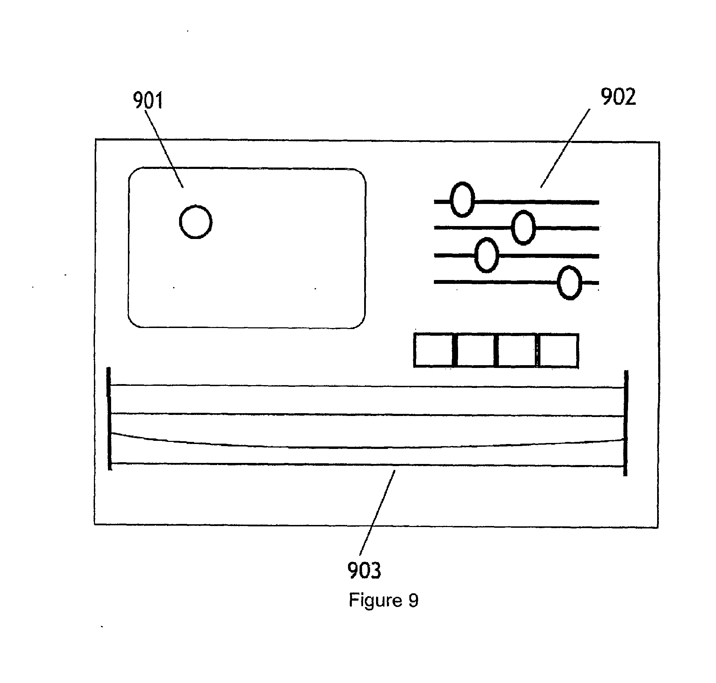

Un autre exemple est illustré par la figure 9 qui représente le contrôle d'un synthétiseur ou d'un générateur de son selon une configuration différente de celle représentée par la figure 7. Ici, la fréquence du générateur de son est contrôlée par quatre cordes virtuelles (903). La tension initiale (l'accord) de chaque corde peut elle-même être contrôlée, par exemple, par un potentiomètre linéaire (902). Une aire 2D peut par exemple contrôler d'autres paramètres du générateur de son, tel que le niveau de sortie, le timbre, le panoramique, etc.

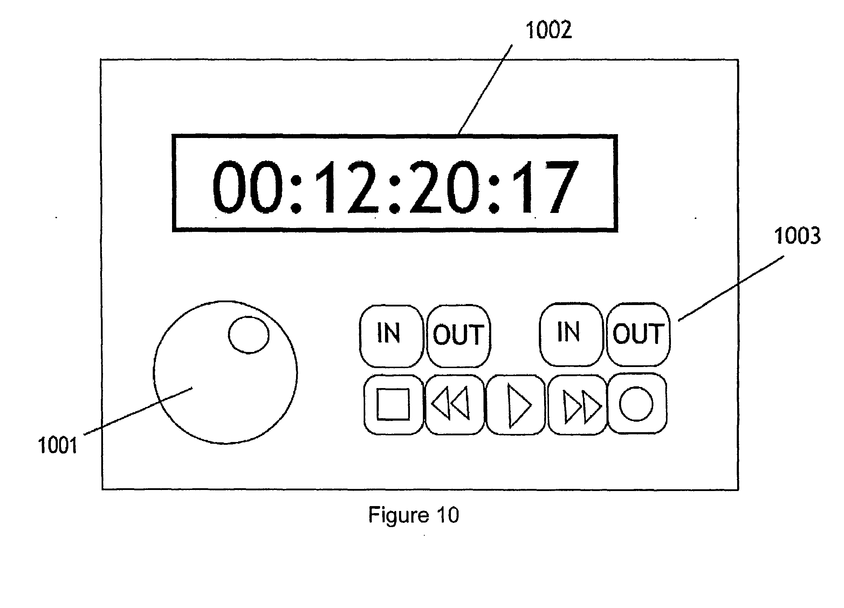

La figure 10 représente le contrôle d'un équipement de montage audio et/ou vidéo de type connu. Une molette (1001) permet de contrôler la vitesse de lecture des sources audio et/ou vidéo. Un objet d'affichage de statut (1002) permet de représenter le positionnement de la lecture selon un format (heure, minute, seconde, image) de type connu. Un ensemble de boutons (1003) permet d'accéder aux fonctions de lecture et de montage de l'appareil contrôlé.

## Revendications

1. Dispositif pour le contrôle d'un équipement informatisé comportant :
- un capteur tactile bidimensionnel multi-contact pour l'acquisition d'une pluralité d'informations tactiles à la fois :
- un écran de visualisation disposé sous le capteur tactile bidimensionnel agencé pour afficher au moins un objet graphique parmi une pluralité d'objets graphiques;
- le capteur tactile bidimensionnel étant transparent de sorte qu'un utilisateur puisse voir le ou chaque objet graphique affiché sur l'écran ;
le dispositif étant **caractérisé en ce qu'**il comprend :
- une mémoire pour stocker la pluralité d'objets graphiques à afficher, chacun des objets graphiques de la pluralité d'objets graphique étant associé à une loi de traitement respective,
- un calculateur local agencé pour analyser la position des informations tactiles acquises par le capteur tactile bidimensionnel multi-contact et pour appliquer la loi de traitement associée à un objet graphique affiché sur l'écran de visualisation en fonction de la position des informations tactiles par rapport à la position de l'objet graphique affiché sur l'écran de visualisation, de sorte à contrôler l'équipement informatisé.

2. Dispositif pour le contrôle d'un équipement informatisé selon la revendication 1, **caractérisé en ce qu'**il est en outre agencé pour se connecter à une multi-prise réseau pour former un réseau de contrôleurs.

3. Dispositif pour le contrôle d'un équipement informatisé selon la revendication 1, **caractérisé en ce que** ledit capteur tactile bidimensionnel multi-contact est une dalle résistive.

4. Dispositif pour le contrôle d'un équipement informatisé selon la revendication 1, **caractérisé en ce que** ledit dispositif comprend en outre une sortie réseau apte à recevoir un câble réseau.

5. Procédé pour le contrôle d'un équipement informatisé par un dispositif comportant un capteur bidimensionnel multi-contact transparent pour l'acquisition d'informations tactiles, ainsi que des moyens de calculs générant des signaux de commande en fonction desdites informations tactiles, le procédé comprenant:
- une étape d'affichage d'un objet graphique sur un écran placé sous ledit capteur tactile multi-contact transparent, l'objet graphique étant associé à une loi de traitement spécifique,
- une étape dans laquelle le capteur bidimensionnel multi-contact délivre, lors de chaque phase d'acquisition, une pluralité d'informations tactiles,
- une étape de traitement des informations tactiles consistant à appliquer à chacune desdites informations tactiles la loi de traitement spécifique associée à l'objet affiché sur l'écran en fonction de la position des informations tactiles par rapport à la position de l'objet graphique affiché sur l'écran.

6. Procédé pour le contrôle d'un équipement informatisé selon la revendication 5, **caractérisé en ce qu'**il met oeuvre un capteur matriciel et qu'il comporte en outre une étape de balayage séquentiel du capteur.

7. Procédé pour le contrôle d'un équipement informatisé selon la revendication 5, **caractérisé en ce que** les traitements comportent une détection de zone englobante de la zone de contact d'un objet avec le capteur tactile.

8. Procédé pour le contrôle d'un équipement informatisé selon la revendication 5, **caractérisé en ce que** les traitements comportent une détection de barycentre.

9. Procédé pour le contrôle d'un équipement informatisé selon la revendication 5, **caractérisé en ce qu'**il comporte des étapes de rafraîchissement des objets graphiques en fonction des traitements effectués lors d'une étape d'acquisitions précédente au moins.

10. Procédé pour le contrôle d'un équipement informatisé selon la revendication 5, **caractérisé en ce qu'**il comporte une étape d'édition d'objets graphiques consistant à générer une représentation graphique à partir d'une bibliothèque de composants et de fonctions graphiques, et à déterminer une loi de traitement associée.

11. Procédé pour le contrôle d'un équipement informatisé selon la revendication 5, **caractérisé en ce que** la fréquence d'acquisition des données tactiles est supérieure à 50 hertz.

12. Procédé pour le contrôle d'un équipement informatisé selon la revendication 5, **caractérisé en** en ce que ledit dispositif communique avec ledit équipement informatisé par une liaison Ethernet.

## Claims

1. A device for controlling a computerized equipment including:
- a multitouch two-dimensional tactile sensor for acquiring a plurality of tactile information at once,
- a display screen positioned under the two-dimensional tactile sensor so arranged as to display at least one graphical object among a plurality of graphical objects;
- the two-dimensional tactile sensor being transparent so that a user can see the or each graphical object displayed on the screen;
the device being **characterized in that** it comprises:
- a memory for storing the plurality of graphical objects to be displayed, each of the graphical objects of the plurality of graphical objects being associated with a respective processing rule,
- a local calculator so arranged as to analyze the position of the tactile information acquired by the multi-contact two-dimensional tactile sensor and to apply the processing rule associated to a graphical object displayed on the display screen according to the position of the tactile information with respect to the position of the graphical object displayed on the display screen, so as to control the computerized equipment.

2. A device for controlling a computerized equipment according to claim 1, **characterized in that** it is further arranged so as to be connected to a network multiple jack to form a network of controllers.

3. A device for controlling a computerized equipment according to claim 1, **characterized in that** said multitouch two-dimensional tactile sensor is a resistive plate.

4. A device for controlling a computerized equipment according to claim 1, **characterized in that** said device further includes a network out port able to receive a network cable.

5. A method for controlling a computerized equipment by means of a device including a transparent multitouch two-dimensional tactile sensor for acquiring tactile information, as well as calculation means generating control signals according to said tactile information, said method comprising:
- a step of displaying a graphical object on a screen positioned under said transparent multitouch two-dimensional tactile sensor, the graphical object being associated with a specific processing rule,
- a step wherein the multi-contact two-dimensional sensor delivers, during each acquisition phase, a plurality of tactile information,
- a step of processing the tactile information consisting in applying, to each one of said tactile information, the specific processing rule associated with the object displayed on the screen according to the position of tactile information with respect to the position of the graphical object displayed on the screen.

6. A method for controlling a computerized equipment according to claim 5, **characterized in that** it implements a matrix sensor and **in that** it further includes a step of sequential scanning of the sensor.

7. A method for controlling a computerized equipment according to claim 5, **characterized in that** the processing operations include a detection of an area encompassing the contact area of an object with the tactile sensor.

8. A method for controlling a computerized equipment according to claim 5, **characterized in that** the processing operations include a detection of a barycenter.

9. A method for controlling a computerized equipment according to claim 5, **characterized in that** it includes steps of refreshing graphical objects according to the processing operations performed during at least one previous acquisition step.

10. A method for controlling a computerized equipment according to claim 5, **characterized in that** it includes a step of editing graphical objects consisting in generating a graphical representation from a library of graphics functions and components, and in determining an associated processing rule.

11. A method for controlling a computerized equipment according to claim 5, **characterized in that** the tactile data acquisition frequency is greater than 50 hertz.

12. A method for controlling a computerized equipment according to claim 5, **characterized in that** said device communicates with said computerized equipment through an Ethernet connection.

## Patentansprüche

1. Vorrichtung für die Kontrolle einer computerisierten Ausrüstung, die folgende Elemente umfaßt:
- Einen zweidimensionalen Tastsensor mit Multikontakten für die Erfassung einer Vielzahl von taktilen Informationen gleichzeitig;
- Ein unter dem zweidimensionalen Tastsensor angeordnetes Display, das so gestaltet ist, daß es mindestens ein grafisches Objekt unter einer Vielzahl graphischer Objekte anzeigt;
- Wobei der zweidimensionale Tastsensor transparent ist, so daß ein Benutzer das oder jedes am Display angezeigte grafische Objekt sehen kann;
Wobei die Vorrichtung **dadurch gekennzeichnet ist, daß** sie folgende Elemente umfaßt:
- Einen Speicher für die Ablage der Vielzahl anzuzeigender graphischer Objekte, wobei jedes der graphischen Objekte der Vielzahl graphischer Objekte einem jeweiligen Verarbeitungsgesetz zugeordnet ist;
- Einen örtlichen Rechner, der so gestaltet ist, daß er die Position der vom zweidimensionalen Tastsensor mit Multikontakten erfaßten taktilen Informationen auswertet, und daß er das Verarbeitungsgesetz, das einem am Display angezeigten grafischen Objekt zugeordnet ist, je nach der Position der taktilen Informationen gegenüber der Position des grafischen Objekts am Display anwendet, so daß die computerisierte Ausrüstung gesteuert wird.

2. Vorrichtung für die Kontrolle einer computerisierten Ausrüstung nach Anspruch 1, **dadurch gekennzeichnet, daß** sie ferner dafür gestaltet ist, daß sie an einen Multinetzanschluß angeschlossen werden kann, damit ein Netz von Controllern entsteht.

3. Vorrichtung für die Kontrolle einer computerisierten Ausrüstung nach Anspruch 1, **dadurch gekennzeichnet, daß** der besagte zweidimensionale Tastsensor mit Multikontakten eine resistive Platte ist.

4. Vorrichtung für die Kontrolle einer computerisierten Ausrüstung nach Anspruch 1, **dadurch gekennzeichnet, daß** die besagte Vorrichtung ferner einen Netzausgang umfaßt, der ein Netzkabel aufnehmen kann.

5. Verfahren für die Kontrolle einer computerisierten Ausrüstung durch eine Vorrichtung, die einen transparenten zweidimensionalen Tastsensor mit Multikontakten für die Erfassung von taktilen Informationen umfaßt, sowie Rechnenmittel, die Steuersignale je nach den besagten taktilen Informationen erzeugen, wobei das Verfahren umfaßt:
- Einen Schritt mit Anzeige eines grafischen Objekts an einem unter dem besagten transparenten zweidimensionalen Tastsensor mit Multikontakten plazierten Display, wobei das grafische Objekt ein einem spezifischen Verarbeitungsgesetz zugeordnet ist;
- Einen Schritt, bei dem der transparente zweidimensionale Sensor mit Multikontakten bei jeder Erwerbsphase eine Vielzahl taktiler Informationen abgibt;
- Einen Schritt mit Verarbeitung der taktilen Informationen, der darin besteht, auf jede der besagten taktilen Informationen das spezifische Verarbeitungsgesetz anzuwenden, das dem am Display angezeigten Objekt zugeordnet ist, und dies je nach der Position der taktilen Informationen gegenüber der Position des am Display angezeigten grafischen Objekts.

6. Verfahren für die Kontrolle einer computerisierten Ausrüstung nach Anspruch 5, **dadurch gekennzeichnet, daß** sie einen Matrixsensor einsetzt, und daß sie ferner einen Schritt mit sequentieller Abtastung des Sensors umfaßt.

7. Verfahren für die Kontrolle einer computerisierten Ausrüstung nach Anspruch 5, **dadurch gekennzeichnet, daß** die Verarbeitungen eine umfassende Zonenentdeckung der Kontaktzone eines grafischen Objekts umfassen.

8. Verfahren für die Kontrolle einer computerisierten Ausrüstung nach Anspruch 5, **dadurch gekennzeichnet, daß** die Verarbeitungen eine Entdeckung des Baryzentrums umfassen.

9. Verfahren für die Kontrolle einer computerisierten Ausrüstung nach Anspruch 5, **dadurch gekennzeichnet, daß** sie Schritte mit Auffrischung der grafischen Objekte je nach den Verarbeitungen umfaßt, die bei mindestens einem vorherigen Schritt mit Erfassung durchgeführt wurden.

10. Verfahren für die Kontrolle einer computerisierten Ausrüstung nach Anspruch 5, **dadurch gekennzeichnet, daß** sie einen Schritt mit Ausgabe der grafischen Objekte umfaßt, der darin besteht, ausgehend von einer Bibliothek mit grafischen Komponenten und Funktionen eine grafische Darstellung zu erzeugen und ein zugehöriges Verarbeitungsgesetz festzulegen.

11. Verfahren für die Kontrolle einer computerisierten Ausrüstung nach Anspruch 5, **dadurch gekennzeichnet, daß** die Frequenz des Erwerbs der Taktilen Daten bei über 50 Hertz liegt.

12. Verfahren für die Kontrolle einer computerisierten Ausrüstung nach Anspruch 5, **dadurch gekennzeichnet, daß** die besagte Vorrichtung über eine Ethernet Verbindung mit der besagten computerisierten Ausrüstung in Verbindung steht.
